# EUROPEAN PATENT SPECIFICATION

(11) **EP 3 020 931 B1**
(45) Date of publication and mention of the grant of the patent: **28.02.2018**
(21) Application number: 15192369.5
(22) Date of filing: 30.10.2015
(51) Int. Cl.: F01D 11/12, F01D 11/00, C09D 5/00, C09D 7/12, C23C 4/11, C23C 4/134

(54) **ABRASIVE ROTOR COATING WITH RUB FORCE LIMITING FEATURES**
ABRASIVE ROTORBESCHICHTUNG MIT ABRIEBSKRAFTBEGRENZUNGSMERKMALEN
REVÊTEMENT DE ROTOR ABRASIF PRÉSENTANT DES CARACTÉRISTIQUES DE LIMITATION DE FORCE DE FROTTEMENT

(30) Priority: 31.10.2014 US 201462073099 P
(43) Date of publication of application: 18.05.2016
(73) Proprietor: United Technologies Corporation, Farmington, CT 06032 (US)
(72) Inventor: STROCK, Christopher W., Kennebunk, ME 04043 (US); BINTZ, Matthew E., West Hartford, CT 06107 (US)
(74) Representative: de Bresser, Sara Jean

(56) References cited:
- EP-A1- 0 484 115
- EP-A1- 1 967 699
- EP-A1- 2 444 593
- EP-A2- 0 965 730
- GB-A- 2 399 777

## Description

### BACKGROUND

The present disclosure relates to an abrasive coating forming a seal material on components of gas turbine engines and a process for forming the abrasive coating.

Gas turbine engines include compressor rotors having a plurality of rotating compressor blades. Minimizing the leakage of air, such as between tips of rotating blades and a casing of the gas turbine engine, increases the efficiency of the gas turbine engine because the leakage of air over the tips of the blades can cause aerodynamic efficiency losses. To minimize this, the gap at tips of the blades is set small and at certain conditions, the blade tips may rub against and engage an abradable seal at the casing of the gas turbine. The abradability of the seal material prevents the damage to the blades while the seal material itself wears to generate an optimized mating surface and thus reduce the leakage of air.

Cantilevered vanes that seal against a rotor shaft are used for elimination of the air leakage and complex construction of vane inside diameter (ID) shroud, abradable seal and knife edges that are used in present gas turbine engines. Current cantilevered vane tip sealing experiences the difficulty that the tip gaps need to be set more open than desirable to prevent rub interactions that can cause rotor shaft coating spallation, vane damage or rotor shaft burn through due to thermal runaway events during rubs. Current materials have been found to lack durability to prevent spallation and lack the abradability to prevent vane damage. EP 2444593 A1 described an abrasive coating on a rotor shaft which interacts with cantilevered vanes to form an abradable seal. The abrasive coating includes a metal bond coat and an abrasive layer containing CBN grit particles in a ceramic matrix.

Blade outer seals do not have as many problems as inner seals, but do need to have the ability to resist fine particle erosion and have a suitable wear ratio between the seal and the airfoil.

It would be an advantage for an abrasive coating for rotor that is capable of running against bare vane tips and have a desirable balance of wear between both the vane tips and the coating. The coating should also prevent catastrophic thermal runaway events, coating spallation, and damage to the vanes.

### SUMMARY

The present disclosure is directed to an abrasive coating forming a seal material on components of gas turbine engines. The abrasive coating may be formed on a surface of a rotor to form a seal with one or more stator vanes. The abrasive coating may also be formed on the inside of a casing to form a seal with the rotor blades.

In accordance with the present disclosure, there is provided an abrasive coating for use in a gas turbine engine, which abrasive coating broadly comprises the abrasive coating being applied to a structure in proximity to at least one section of the gas turbine engine having a plurality of airfoils, the abrasive coating in a first mode of operation of the gas turbine engine being capable of causing wearing of tips of the airfoils that come into contact with the abrasive coating, and the abrasive coating in a second mode of operation of the gas turbine engine having an interparticle strength sufficient to allow for fracture of the abrasive coating. The abrasive coating consists of ceramic particles being embedded within a matrix of a soft or weak filler material and at least one metal or metal alloy. The ceramic particles are angular particles and have a longitudinal dimension in the range of from 50 to 150 microns. The at least one metal or metal alloy comprises a metal or metal alloy selected from the group consisting of nickel, nickel based alloys, copper, copper based alloys, cobalt, cobalt based alloys, aluminum, aluminum alloys, MCrAlY where M comprises at least one of nickel, cobalt, and iron, and mixtures thereof.

In another and alternative embodiment, the abrasive coating wears the tips of the airfoils during low radial interaction rates between the abrasive coating and the airfoils and the abrasive coating fractures during high interaction rates between the abrasive coating and the airfoils.

In another and alternative embodiment, the ceramic particles have sufficient strength to cut the tips of the airfoils.

In another and alternative embodiment, the ceramic particles are selected from the group consisting of aluminum oxide particles, zirconia, cubic boron nitride, silicon carbide, alloys, and mixtures thereof.

Further in accordance with the present disclosure, there is provided a process of forming a seal in a gas turbine engine, the process broadly comprising providing the gas turbine engine with at least one section having at least one airfoil with a bare metal tip, providing at least one structure in proximity to the at least one airfoil with the bare metal tip, and applying an abrasive coating having a first mode wherein the abrasive coating removes metal from the airfoil tip and a second mode wherein the abrasive coating fractures on the at least one structure. The abrasive coating consists of angular ceramic particles with a longitudinal dimension in the range of from 50 to 150 microns embedded within a matrix of a soft or weak filler material and at least one metal or metal alloy selected from the group consisting of nickel, nickel based alloys, copper, copper based alloys, cobalt, cobalt based alloys, aluminum, aluminum alloys, MCrAlY where M comprises at least one of nickel, cobalt, and iron, and mixtures thereof.

In another and alternative embodiment, the at least one airfoil moves radially during operation of the gas turbine engine and the abrasive coating is in the first mode when the at least one airfoil tip moves less than 0.0254 cm (10 mils) per second.

In another and alternative embodiment, the abrasive coating is in the second mode when the at least one airfoil tip moves more than 1.27 cm (0.5 inch) per second.

In another and alternative embodiment, the coating applying step comprises providing a feedstock containing a metal or metal alloy, hexagonal boron nitride, and ceramic particles, feeding the feedstock to a nozzle, and air plasma spraying the metal or metal alloy, the hexagonal boron nitride, and the ceramic particles onto the at least one structure.

In another and alternative embodiment, the feedstock providing step comprises providing the metal or metal alloy in an amount from 15 vol% to 45 vol%, providing the ceramic particles in an amount from 0.5 vol% to 15 vol%, and providing hexagonal boron nitride as a remainder.

In another and alternative embodiment, the air plasma spraying step is performed at a temperature which causes droplets of ceramic particles to form and to be deposited onto the at least one structure as a splat.

In another and alternative embodiment, the feedstock providing step comprises providing a first component consisting of from 20 vol% to 30 vol% Ni20Cr and the remainder hexagonal boron nitride with constituent particles of 1.0 micron to 25 microns in size and an agglomerate particle size in the range of from 25 microns to 150 microns, and providing a second component consisting of aluminum oxide based abrasive particles having a size in the range of from 50 to 150 microns.

In another and alternative embodiment, the coating applying step comprises applying a coating having from 1.0 to 10 vol% of aluminum oxide abrasive particles.

Still further in accordance with the present disclosure (and which the Applicant expressly reserves the right to claim independently), there is provided a gas turbine engine which broadly comprises an engine casing extending circumferentially about an engine centerline axis, a compressor section, a combustor section, and a turbine section within the engine casing, at least one of the compressor section and the turbine section including at least one airfoil and at least one seal member adjacent to the at least one airfoil, the at least one airfoil having a tip formed from a bare metal, and the at least one seal member comprising an abrasive coating which in a first mode of operation of the gas turbine engine has sufficient interparticle strength to cause wearing of the tip of the at least one airfoil when the tip comes into contact with the abrasive coating, and which in a second mode of operation of the gas turbine engine has an interparticle strength sufficient to allow for fracture of the abrasive coating.

In another and alternative embodiment, the abrasive coating is in the first mode when the airfoil tip radially moves less than 1.27 mm (50 mils) per second.

In another and alternative embodiment, the abrasive coating is in the second mode when the airfoil tip radially moves more than 1.27 cm (0.5 inch) per second.

Other details of the coating with abradability proportional to interaction rate are set forth in the following detailed description and the accompany drawings, in which like reference numerals depict like elements.

### BRIEF DESCRIPTION OF THE DRAWINGS

FIG. 1 illustrates a simplified cross-sectional view of a gas turbine engine.
FIG.2 illustrates a simplified cross sectional view of a rotor shaft inside a casing illustrating the relationship of the rotor and cantilevered vanes taken along the line 2-2 of FIG. 1.
FIG. 3 is a cross sectional view taken along line 3 - 3 of FIG. 2.
FIG. 4 is a cross sectional view of another abrasive coating embodiment.
FIG. 5 illustrates an engine casing having an abrasive coating.
FIG. 6 is a sectional view taken along lines 5 - 5 of FIG. 5.

### DETAILED DESCRIPTION

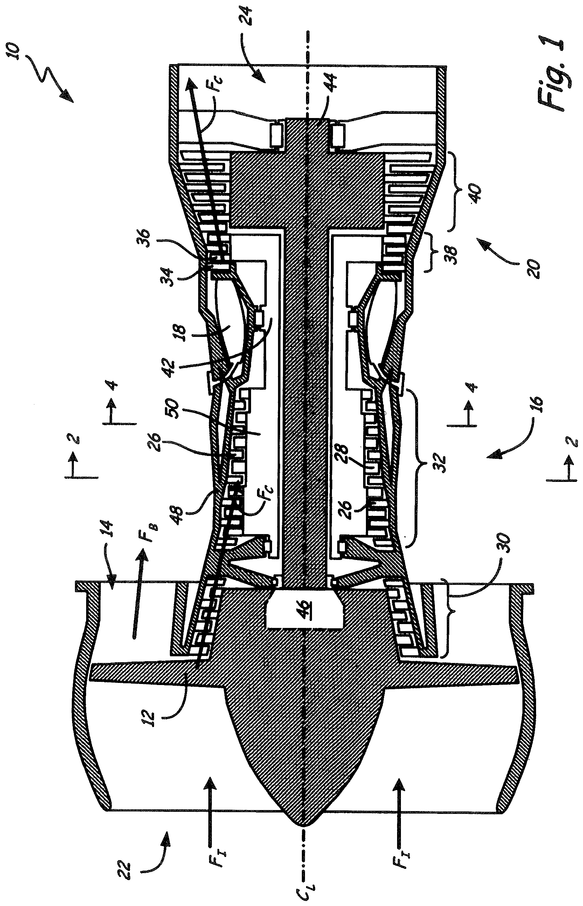

FIG. 1 is a cross sectional view of gas turbine engine 10, in a turbofan embodiment. As shown in FIG. 1, turbine engine 10 comprises fan 12 positioned in bypass duct 14, with bypass duct 14 oriented about a turbine core comprising compressor section 16, combustor or combustors 18, and turbine section 20, arranged in flow series with upstream inlet 22 and downstream exhaust 24.

Compressor section 16 may comprise stages of compressor vanes 26 and blades 28 arranged in low pressure compressor section 30 and high pressure compressor section 32. Turbine section 20 may comprise stages of turbine vanes 34 and turbine blades 36 arranged in high pressure turbine section 38 and low pressure turbine section 40. The high pressure turbine section 38 may be coupled to the high pressure compressor section 32 via a first shaft 42, thereby forming a high pressure spool or high spool. The low pressure turbine section 40 may be coupled to the low pressure compressor section 30 and fan 12 via a second shaft 44, forming a low pressure spool or low spool. The shafts 42 and 44 may be coaxially mounted, with the high and low spools independently rotating about turbine axis (centerline) CL.

Fan 12 comprises a number of fan airfoils circumferentially arranged around a fan disk or other rotating member, which is coupled directly or indirectly to the low pressure compressor section 30 and driven by shaft 44. In some embodiments, the fan 12 may be coupled to the fan spool via a geared fan drive mechanism 46, providing independent fan speed control.

As shown in FIG. 1, fan 12 is forward-mounted and provides thrust by accelerating flow downstream through bypass duct 14. Alternatively, fan 12 may be an unducted fan or propeller assembly, in either a forward or aft-mounted configuration. In these various embodiments, turbine engine 10 may comprise any of a high-bypass turbofan, a low-bypass turbofan or a turboprop engine, and the number of spools and the shaft configurations may vary. Also contemplated for use with the abrasive coating described herein are marine and land based turbines that may or may not have a fan or propeller.

In operation of turbine engine 10, incoming airflow F1 enters inlet 22 and divides into core flow FC and bypass flow FB, downstream of fan 12. Core flow FC propagates along the core flowpath through compressor section 16, combustor 18 and turbine section 2, and bypass flow FB propagates along the bypass flowpath through bypass duct 14.

Low pressure compressor section 30 and high pressure compressor section 32 are utilized to compress incoming air for combustor 18, where fuel is introduced, mixed with air and ignited to produce hot combustion gas. Depending on a particular embodiment, fan 12 may also provide some degree of compression or pre-compression to core flow FC and low pressure compressor section 30 may be omitted. Alternatively, an additional intermediate spool may be included =, for example, in a three-spool turboprop or turbofan configuration.

Combustion gas exits combustor 18 and enters high pressure turbine section 38, encountering turbine vanes 34 and turbine blades 36. Turbine vanes 34 turn and accelerate the flow, and drive high pressure compressor section 32. Partially expanded combustion gas transitions from high pressure turbine section 38 to low pressure turbine section 40, driving low pressure compressor section 30 and fan 12 via shaft 44. Exhaust flow exits low pressure turbine section 40 and turbine engine 10 via exhaust nozzle 24.

The thermodynamic efficiency of turbine engine 10 is tied to the overall pressure ratio, as defined between the delivery pressure at inlet 22 and the compressed air pressure entering combustor 18 from compressor section 16. In general, a higher pressure ratio offers increased efficiency and improved performance, including greater specific thrust. High pressure ratios also result in increased peak gas path temperatures, higher core pressure and greater flow rates, increasing thermal and mechanical stress on engine components.

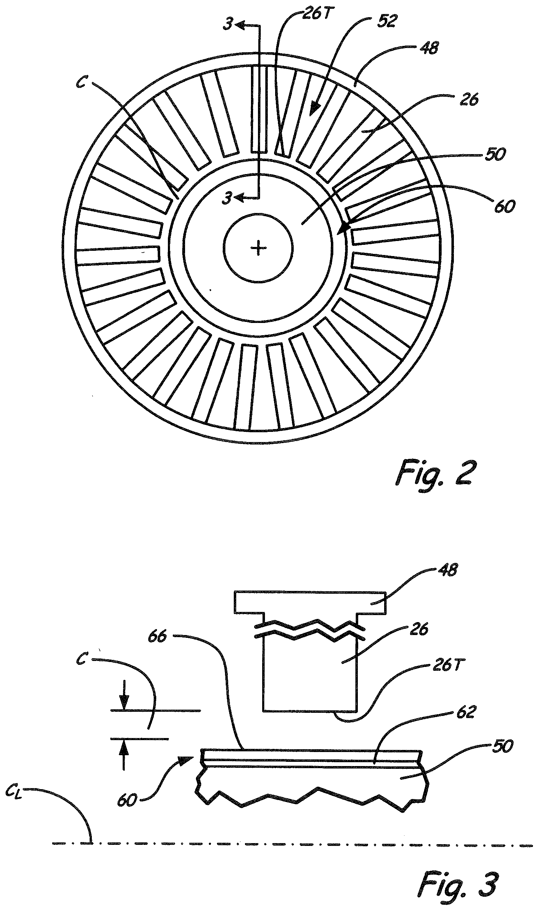

FIG. 2 is a cross section along line 22 of FIG. 1 of a casing 48 which has a rotor shaft 50 inside. Vanes 26 are attached to casing 48 and the gas path 52 is shown as the space between vanes 26. Abrasive coating 60, corresponding to the abrasive coating described hereinafter, is formed on rotor shaft 50 such that the clearance C between abrasive coating 60 and vane tips 26T has the proper tolerance for operation of the engine, e.g. to serve as a seal to prevent leakage of air (thus reducing efficiency), while not interfering with relative movement of the vanes and rotor shaft. In FIGS. 2 and 3, clearance C is expanded for purposes of illustration. In practice, clearance C may be, for example, in a range of about 0.025 inches (0.635 mm) to 0.055 inches (1.397 mm) when the engine is cold and 0.000 to 0.03 inches (0.762 mm) during engine operation, depending on the specific operation conditions and previous rub events that may have occurred.

FIG. 3 shows the cross section along line 3-3 of FIG. 2, with casing 48 and vane 26. An abrasive coating 60 is attached to rotor shaft 50, with a clearance C between coating 60 and vane tip 26T of vane 26 that varies with operating conditions, as described herein.

FIG. 3 shows an embodiment comprising a bi-layer coating 60 which includes a metallic bond coat 62 and an abrasive layer 66. Metallic bond coat 62 may be applied to the rotor shaft 50. Abrasive layer 66 may be deposited on top of bond coat 62 and may be the layer which first encounters vane tip 26T.

Bond coat 62 is thin, up to about 254 microns (10 mils), more specifically ranging from about about 76 to about 178 microns (3 mils to about 7 mils). Abrasive coating layer 66 may be about the same thickness as bond coat 62, again ranging from about 76 to about 178 microns (about 3 mils to about 7 mils), while some applications that have larger variation in tip clearance may require a thicker abrasive layer 66. Abrasive layer 66 may be as thick as 7620 microns (300 mils) in some applications.

The bond coat forming the layer 62 may be MCr, MCrAl, MCrAlY or a refractory modified MCrAlY, where M is nickel, cobalt, iron, or mixtures thereof. For example, bond coat 62 may be 15 - 40 wt% Cr, 6 - 15 wt% Al, 0.61 to 1.0 wt% Y, and the balance is at least one of cobalt, nickel, and/or iron.

The abrasive layer 66 has a composite matrix of a metal or metal alloy loaded with soft or weak filler into which flat or angular thermal ceramic particles or inclusions have been added. The metal used in the abrasive layer 66 may be at least one of Ni, Co, Cu, and Al. The metal alloys used in the abrasive layer 66 may be at least one of a nickel based alloy, a copper based alloy, a cobalt based alloy, an aluminum based alloy, and a MCrAlY where M is selected from the group consisting of nickel, cobalt, iron, and mixtures thereof. Suitable metal alloys which may be used include Ni20Cr, copper-nickel alloys, and copper-aluminum bronzes.

The amount of a metal present in the abrasive layer 66, such as nickel or nickel alloy, to the soft or weak filler, such as hexagonal boron nitride, in the abradable matrix may range from about 30% to 60% by volume, and more specifically, in the case of nickel as the metal, from about 40% to about 50% nickel by volume, with the balance being hBN as the filler.

The ceramic particles may be any ceramic that has a hardness of seven or more on the Mohs Scale for hardness, such as silica, cubic boron nitride, quartz, alumina, and zirconia, and that at least partially melts at the spray temperatures. The amount of ceramic in abrasive layer 66 ranges from about 1.0% to 10% by volume. As noted above, the amount of metal alloy in the abrasive layer 66 may range from about 30% to 60% by volume and the balance, from about 30% to about 69% by volume, is the soft or weak filler selected from the group consisting of hexagonal boron nitride (hBN), bentonite clay, talc, graphite, glass or ceramic microspheres, and loosely bonded agglomerates of a ceramic, like alumina. The ceramic particles may be formed from any suitable grit media.

The nickel alloy, the soft or weak filler, such as hBN, and a ceramic material may be deposited as a coating on the structure in proximity to the tips 26T of the airfoils, such as vanes 26, using an air plasma spray technique to deposit the material onto a turbine engine component such as the rotor shaft 50. In this technique, one may individually feed the powders to one or more spray heads or may blend the powders and then feed them to one or more spray heads. Other spray processes would also be effective, such as combustion flame spray, HVOF, HVAF, LPPS, VPS, HVPS and the like. As part of the abrasive layer 66 is a quantity of ceramic particles that may at least partially melt during the spray process to form disc like flat particles, or splat particles, when the droplets of molten particles contact the rotor shaft 50. In an alternative approach, the ceramic particles may be injected into a cooler, downstream area of the plasma plume so that the ceramic particles mechanically embed into the coating without melting. This alternative approach allows the ceramic particles to have a better cutting capability.

The abrasive layer 66 may be engineered to have an interparticle strength, the strength between the particles of the abrasive layer, which in a first or normal mode of operation of the gas turbine engine allows the abrasive layer 66 to wear the metal tips 26T of the vane airfoils. By wear, it is meant that metal is removed from the tips 26T. During this mode of operation, the rub forces are at a low radial interaction rate and the bonding between the particles should be strong enough to withstand operational stresses such as those caused by centrifugal forces and thermal stresses. The interparticle strength of the layer 66 in a second mode of operation, one characterized by hard rubs between the tips 26T and the abrasive layer 66, allows the material forming the abrasive layer 66 to fracture and liberate particles in the abrasive layer 66. Hard rubs are caused by high interaction rates associated with surge, bird strike, severe vibration, etc. In this way, the rub forces are limited.

During operation of a gas turbine engine, airfoils, such as the vanes 26, may move radially. Normal operation, or the first mode of operation of the gas turbine engine is one in which the airfoils move at a rate of less than 1.27 mm (50 mils) per second, usually less than 0.254 mm (10 mils) per second. Hard rub situations occur when the airfoils move at a rate greater than 12.7 mm (0.5 inch) per second.

The abrasive layer 66 is not a fully dense coating and may have a porosity less than about 15%. The porosity of the abrasive layer 66 creates a surface roughness which allows gas permeability to reduce the aerodynamic effect. The abrasive layer may be provided with a porosity in the range of from 3.0 to 8.0%. The porosity of the final abrasive layer 66 may be controlled during the spray application of the abrasive layer 66.

The abrasive layer 66 may be deposited on a turbine engine component in close proximity to the tips of airfoils such as those in the compressor section and the turbine section of the gas turbine engine. For example, the abrasive layer 66 may be deposited on the casing 48 and/or the rotor shaft 50 using a spray process such as an air plasma spray. To illustrate one way of forming the abrasive layer 66, a feedstock used during the air plasma spray process may comprise 15 vol% to 45 vol% of a metal or metal alloy, from 0.5 vol% to 15 vol% ceramic particles, and hexagonal boron nitride or another filler selected from the group consisting of bentonite clay, talc, graphite, glass or ceramic microspheres, and loosely bonded agglomerates of a ceramic such as alumina as a remainder. To illustrate another way of forming an abrasive layer, a feedstock used during the air plasma spray process may comprises composite particles of from 20 vol% to 30 vol% Ni20Cr and the remainder being hBN with constituent particles of 1.0 to 25 microns in diameter and agglomerate particles sized in the range of from 25 to 150 micron particle size diameter. The Ni20Cr and hBN particles may be co-sprayed with aluminum oxide based abrasive particles of from 50 - 150 microns in diameter so as to produce a coating with from 1.0 to 10 vol% of abrasive particles. For either approach, a 3MB plasma spray torch with a #705 nozzle running on 100 scfh of argon and 10 scfh of hydrogen may be used to deposit the abrasive layer 66. The abrasive layer 66 may be deposited at a temperature which creates splats of the ceramic particles on the turbine engine component. During this process, the droplets of ceramic particles spread out to form the splat upon contact with the turbine engine component. The splats of ceramic particles may have a longitudinal dimension greater than 25 microns. The resultant abrasive layer 66 may have a cohesive strength of from 300 to 1200 psi (2.068 to 8.274 MPa).

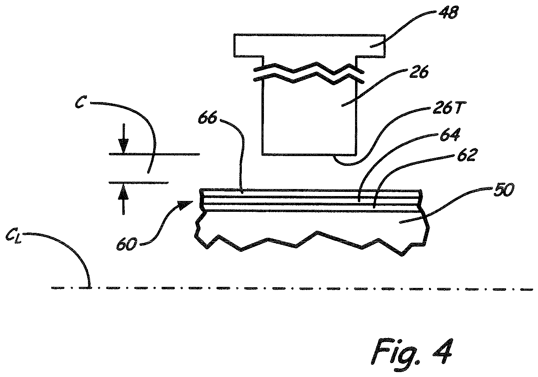

If desired, the abrasive layer 66 may be deposited on an intermediate thermally insulating layer to further protect the rotor shaft from burn through during excessive vane contact. FIG. 4 shows an embodiment comprising tri-layer coating 60, which includes intermediate insulating ceramic layer 64 between abrasive layer 66 and bottom bond coat layer 62.

Optional ceramic layer 64, shown in FIG. 4, may be any of the zirconia based ceramics such as are described in U.S. Patent Nos. 4,861,618, 5,879,573, 6,102,656 and 6,358,002. Zirconia stabilized with 6-8wt% yttrium is one example of such a ceramic layer 64. Other examples are zirconia stabilized with feria, magnesia, mullite, calcia, and mixtures thereof. Thermally insulating ceramic layer 64 thickness may range from about 178 to about 305 microns (about 7 mils to about 12 mils). In many instances, there is no need for optionally thermally insulating ceramic layer 64 because abrasive coating 66 functions to remove material by low temperature abrasion minimizing or eliminating thermal burn through of the rotor in high interaction rate events.

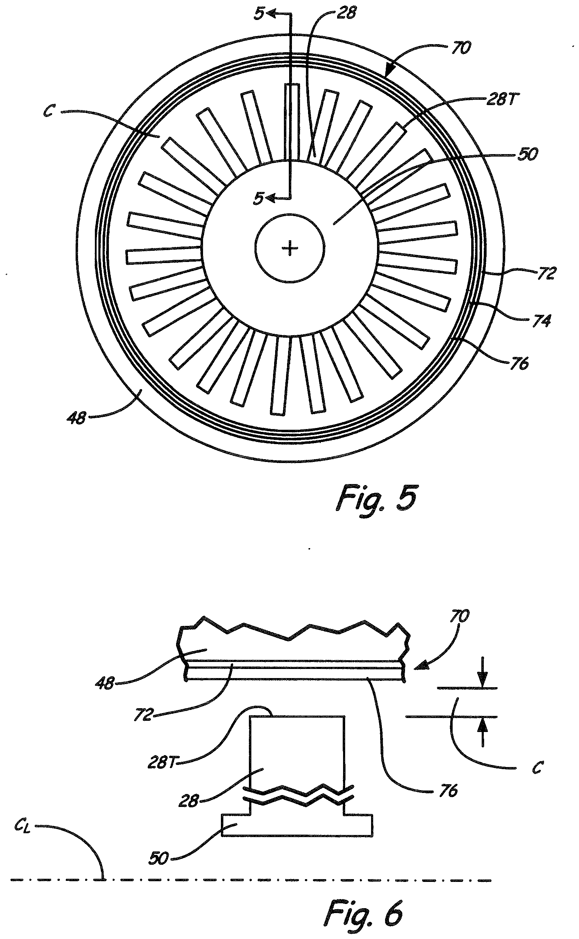

As can be seen from FIG. 5 and FIG. 6, the same concept may be used in which coating 70 is provided on the inner diameter surface of casing or shroud 48. Coating 70 includes a first metallic bond coat 72 that has been applied to the inner diameter (ID) of stator casing 48. In other embodiments, stator casing 48 includes a shroud that forms a blade air seal. Abrasive layer 76 may be formed on metallic bond coating 72 and is the layer that first encounters rotor tip 28T.

Coating 66 and 76, during fast and/or deep rubs, known as hard rubs, is engineered to have an interparticle strength which allows the coating 66 and 76 to fracture, and thus prevent catastrophic runaway events and damage to turbine components. Hard rubs result from events such as surge, bird strike, severe vibration, shaft deflections, vibrational modes, and hard landings. A hard rub would be characterized by the airfoil moving radially at a rate of 0.5 inch (12.7 mm) per second. During low radial speed rub interactions when frictional heating is low during normal operation, namely radial movement of the airfoil at a rate of less than 0.254 mm (10 mils) per second, the ceramic particles in the abrasive layer 66 and/or 76 result in the desired wear of the airfoil tips 26T and/or 28T. When the interaction rate and rub forces increase for any reason, including local vane material transfer, thermal growth and high interaction rates, rub forces may climb only to a limit. Coating 66 and 76 is designed to have a low enough interparticle strength to limit the rub forces on the airfoils 26 and 28 by wearing the tips 26T and 28T at contact pressures of less than about 1,000 psi (6.895 MPa). In one exemplary instance, a 1,000 psi (6.895 MPa) coating strength relates to about 20 pounds (89 N) per vane loading of compressor stators. Because the bulk coating of the abrasive layer 66 and 76 must meet the durability requirements of the environment, such as the high G environment of the shaft outside diameter in a cantilevered vane sealing application, the abrasive coating 66 and 76 has a strength of greater than about 300 psi (2.068 MPa).

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the disclosure without departing from the scope thereof. Therefore, it is intended that the invention not be limited to the particular embodiment(s) disclosed, but that the disclosure will include all embodiments falling within the scope of the appended claims.

## Claims

1. An abrasive coating (60;70) for use in a gas turbine engine, said abrasive coating comprising:
said abrasive coating (60;70) being applied to a gas turbine engine structure in close proximity to at least one section of said gas turbine engine having a plurality of airfoils (26;28);
said abrasive coating (60;70) in a first mode of operation of said gas turbine engine being capable of causing wearing of tips (26T;28T) of said airfoils (26;28) that come into contact with the abrasive coating (60;70); **characterized in that**:
said abrasive coating (60;70) consists of angular ceramic particles with a longitudinal dimension in the range of from 50 to 150 microns embedded within a matrix of a soft or weak filler material and at least one metal or metal alloy selected from the group consisting of nickel, nickel based alloys, copper, copper based alloys, cobalt, cobalt based alloys, aluminum, aluminum alloys, MCrAlY where M comprises at least one of nickel, cobalt, and iron, and mixtures thereof; and
said abrasive coating (60;70) in a second mode of operation of said gas turbine engine having an interparticle strength sufficient to allow for fracture of said coating (60;70) to limit rub forces on the airfoils (26;28).

2. The abrasive coating of claim 1, wherein said abrasive coating (60;70) wears said tips (26T;28T) of said airfoils (26;28) during low radial interaction rates between said abrasive coating (60;70) and said airfoils (26;28) and wherein said abrasive coating (60;70) fractures during high interaction rates between said abrasive coating (60;70) and said airfoils (26;28) to limit said rub forces.

3. The abrasive coating of claim 1 or claim 2, wherein said soft or weak filler material is selected from the group consisting of hexagonal boron nitride, bentonite clay, talc, graphite, glass or ceramic microspheres, and loosely bonded agglomerates of a ceramic.

4. The abrasive coating of any preceding claim, wherein said ceramic particles have sufficient strength to cut the tips (26T;28T) of said airfoils (26;28).

5. The abrasive coating of any preceding claim, wherein said ceramic particles are selected from the group consisting of aluminum oxide particles, zirconia, cubic boron nitride, silicon carbide, alloys and mixtures thereof.

6. A process of forming a seal in a gas turbine engine (10), the process comprising:
providing said gas turbine engine (10) with at least one section having at least one airfoil (26;28) with a bare metal tip (26T;28T);
providing at least one structure in proximity to said at least one airfoil (26;28) with said bare metal tip (26T;28T); and
applying an abrasive coating (60;70) having a first mode wherein said coating (60;70) removes metal from said airfoil tip (26T;28T); **characterized in that**:
said abrasive coating (60;70) consists of angular ceramic particles with a longitudinal dimension in the range of from 50 to 150 microns embedded within a matrix of a soft or weak filler material and at least one metal or metal alloy selected from the group consisting of nickel, nickel based alloys, copper, copper based alloys, cobalt, cobalt based alloys, aluminum, aluminum alloys, MCrAlY where M comprises at least one of nickel, cobalt, and iron, and mixtures thereof; and
said abrasive coating has a second mode wherein said abrasive coating (60;70) fractures on said at least one structure to limit rub forces on said at least one airfoil (26;28).

7. The process of claim 6, wherein said at least one airfoil (26;28) moves radially during operation of said gas turbine engine (10) and said abrasive coating (60;70) is in said first mode when said at least one airfoil (26;28) moves less than 10 mils per second, and/or wherein said abrasive coating (60;70) is in said second mode when said at least one airfoil (26;28) moves more than 1.27 cm (0.5 inch) per second.

8. The process of claim 6 or claim 7, wherein said abrasive coating applying step comprises providing a feedstock containing a metal or metal alloy, hexagonal boron nitride, and ceramic particles, feeding said feedstock to a nozzle, and air plasma spraying said metal or metal alloy, said hexagonal boron nitride, and said ceramic particles onto said at least one structure, wherein, optionally, said air plasma spraying step is performed at a temperature which causes droplets of ceramic particles to form and to be deposited onto said at least one structure as a splat.

9. The process of claim 8, wherein said feedstock providing step comprises providing said metal or metal alloy is present in an amount from 15 vol% to 45 vol%, providing said ceramic particles in an amount from 0.5 vol% to 15 vol%, and providing hexagonal boron nitride as a remainder.

10. The process of claim 9, wherein said feedstock providing step comprises providing a first component consisting of from 20 vol% to 30 vol% Ni20Cr and the remainder hexagonal boron nitride with constituent particles of 1.0 micron to 25 microns in size and an agglomerate particle size in the range of from 25 microns to 150 microns, and providing a second component consisting of aluminum oxide based abrasive particles having a size in the range of from 50 to 150 microns.

11. The process of claim 10, wherein said coating applying step comprises applying a coating having from 1.0 to 10 vol% of aluminum oxide abrasive particles.

## Patentansprüche

1. Abrasive Beschichtung (60; 70) zur Verwendung in einem Gasturbinentriebwerk, wobei die abrasive Beschichtung Folgendes umfasst:
die abrasive Beschichtung (60; 70) wird auf eine Gasturbinentriebwerkstruktur in unmittelbarer Nähe zu mindestens einem Bereich des Gasturbinentriebwerks, der eine Vielzahl von Turbinenschaufeln (26; 28) aufweist, aufgetragen;
die abrasive Beschichtung (60; 70) ist in einem ersten Betriebsmodus des Gasturbinentriebwerks in der Lage, ein Abnutzen der Spitzen (26T; 28T) der Turbinenschaufeln (26; 28), die mit der abrasiven Beschichtung (60; 70) in Kontakt kommen, hervorzurufen; **dadurch gekennzeichnet, dass**:
die abrasive Beschichtung (60; 70)aus winkelförmigen Keramikpartikeln mit einer Längsabmessung im Bereich von 50 bis 150 Mikrometern besteht, die in eine Matrix aus einem weichen oder schwachen Füllmaterial und mindestens einem Metall oder einer Metalllegierung eingebettet sind, das/die aus der Gruppe bestehend aus Nickel, Legierungen auf Nickelbasis, Kupfer, Legierungen auf Kupferbasis, Kobalt, Legierungen auf Kobaltbasis, Aluminium, Legierungen auf Aluminiumbasis, MCrAlY, wobei M mindestens eins von Nickel, Kobalt und Eisen umfasst, und Mischungen davon ausgewählt ist; und
die abrasive Beschichtung (60; 70) in einem zweiten Betriebsmodus des Gasturbinentriebwerks eine interpartikuläre Festigkeit aufweist, die ausreicht, um ein Brechen der Beschichtung (60; 70) zu ermöglichen, um die Abriebskräfte auf die Turbinenschaufeln (26; 28) zu begrenzen.

2. Abrasive Beschichtung nach Anspruch 1, wobei die abrasive Beschichtung (60; 70) die Spitzen (26T; 28T) der Turbinenschaufeln (26; 28) während niedriger radialer Interaktionsraten zwischen der abrasiven Beschichtung (60; 70) und den Turbinenschaufeln (26; 28) abnutzt und wobei die abrasive Beschichtung (60; 70) während hoher Interaktionsraten zwischen der abrasiven Beschichtung (60; 70) und den Turbinenschaufeln (26; 28) bricht, um die Abriebskräfte zu begrenzen.

3. Abrasive Beschichtung nach Anspruch 1 oder Anspruch 2, wobei das weiche oder schwache Füllmaterial aus der Gruppe bestehend aus hexagonalem Bornitrid, Bentonitton, Talk, Graphit, Glas- oder Keramikmikrokugeln und lose verbundenen Agglomeraten einer Keramik ausgewählt ist.

4. Abrasive Beschichtung nach einem der vorhergehenden Ansprüche, wobei die Keramikpartikel eine Festigkeit aufweisen, die ausreicht, um die Spitzen (26T; 28T) der Turbinenschaufeln (26; 28) abzuschneiden.

5. Abrasive Beschichtung nach einem der vorhergehenden Ansprüche, wobei die Keramikpartikel aus der Gruppe bestehend aus Aluminiumoxidpartikeln, Zirkoniumdioxid, kubischem Bornitrid, Siliziumkarbid, Legierungen und Mischungen davon ausgewählt ist.

6. Verfahren zum Bilden einer Dichtung in einem Gasturbinentriebwerk (10), wobei das Verfahren Folgendes umfasst:
Bereitstellen des Gasturbinentriebwerks (10) mit mindestens einem Bereich, der mindestens eine Turbinenschaufel (26; 28) mit einer blanken Metallspitze (26T; 28T) aufweist;
Bereitstellen mindestens einer Struktur in der Nähe der mindestens einen Turbinenschaufel (26; 28) mit einer blanken Metallspitze (26T; 28T); und
Auftragen einer abrasiven Beschichtung (60; 70), die einen ersten Modus aufweist, bei dem die Beschichtung (60; 70) Metall von der Turbinenschaufelspitze (26T; 28T) entfernt; **dadurch gekennzeichnet, dass**:
die abrasive Beschichtung (60; 70) aus winkelförmigen Keramikpartikeln mit einer Längsabmessung im Bereich von 50 bi 150 Mikrometern besteht, die in eine Matrix eines weichen oder schwachen Füllmaterials und mindestens eines Metalls oder einer Metalllegierung eingebettet sind, das/die aus der Gruppe bestehend aus Nickel, Legierungen auf Nickelbasis, Kupfer, Legierungen auf Kupferbasis, Kobalt, Legierungen auf Kobaltbasis, Aluminium, Legierungen auf Aluminiumbasis, MCrAlY, wobei M mindestens eins von Nickel, Kobalt und Eisen umfasst, und Mischungen davon ausgewählt ist; und
die abrasive Beschichtung einen zweiten Modus aufweist, bei dem die abrasive Beschichtung (60; 70) auf der mindestens einen Struktur bricht, um die Abriebskräfte auf die mindestens eine Turbinenschaufel (26; 28) zu begrenzen.

7. Verfahren nach Anspruch 6, wobei die mindestens eine Turbinenschaufel (26; 28) sich während des Betriebs des Gasturbinentriebwerks (10) radial bewegt und die abrasive Beschichtung (60; 70) sich im ersten Modus befindet, wenn sich die mindestens eine Turbinenschaufel (26; 28) weniger als 10 Mils pro Sekunde bewegt, und/oder wobei sich die abrasive Beschichtung (60; 70) im zweiten Modus befindet, wenn die mindestens eine Turbinenschaufel (26; 28) sich mehr als 1,27 cm (0,5 Zoll) pro Sekunde bewegt.

8. Verfahren nach Anspruch 6 oder Anspruch 7, wobei der Schritt des Auftragens der abrasiven Beschichtung das Bereitstellen eines Ausgangsmaterials, das ein Metall oder eine Metalllegierung, hexagonales Bornitrid und Keramikpartikel enthält, das Einspeisen des Ausgangsmaterial in eine Düse und das Luftplasmaspritzen des Metalls oder der Metalllegierung, des hexagonalen Bornitrids und der Keramikpartikel auf die mindestens eine Struktur umfasst, wobei optional der Schritt des Luftplasmaspritzens bei einer Temperatur durchgeführt wird, die dazu führt, dass sich Tröpfchen aus Keramikpartikeln bilden und sich als Spritzer auf der mindestens einen Struktur absetzen.

9. Verfahren nach Anspruch 8, wobei der Schritt des Bereitstellens des Ausgangsmaterials das Bereitstellen des Metalls oder der Metalllegierung in einem Anteil von 15 Vol-% bis 45 Vol-%, das Bereitstellen der Keramikpartikel in einem Anteil von 0,5 Vol-% bis 15 Vol-% und das Bereitstellen von hexagonalem Bornitrid für den Rest umfasst.

10. Verfahren nach Anspruch 9, wobei der Schritt des Bereitstellens des Ausgangsmaterials das Bereitstellen einer ersten Komponente bestehend aus 20 Vol-% bis 30 Vol-% Ni20Cr und für den Rest hexagonalem Bornitrid mit konstituierenden Partikeln mit einer Größe von 1,0 Mikrometer bis 25 Mikrometern und einer Agglomeratpartikelgröße im Bereich von 25 Mikrometern bis 150 Mikrometern und das Bereitstellen einer zweiten Komponente bestehend aus abrasiven Partikeln auf Aluminiumoxidbasis, die eine Größe im Bereich von 50 bis 150 Mikrometern aufweisen, umfasst.

11. Verfahren nach Anspruch 10, wobei der Schritt des Auftragens der Beschichtung das Auftragen einer Beschichtung, die 1,0 bis 10 Vol-% abrasive Partikel aus Aluminiumoxid aufweist.

## Revendications

1. Revêtement abrasif (60 ; 70) destiné à être utilisé dans un moteur à turbine à gaz, ledit revêtement abrasif comprenant :
ledit revêtement abrasif (60 ; 70) étant appliqué sur une structure de moteur à turbine à gaz à proximité immédiate d'au moins une section dudit moteur à turbine à gaz ayant une pluralité de profils aérodynamiques (26 ; 28) ;
ledit revêtement abrasif (60 ; 70) dans un premier mode de fonctionnement dudit moteur à turbine à gaz étant capable de provoquer l'usure des pointes (26T ; 28T) desdits profils aérodynamiques (26 ; 28) qui entrent en contact avec le revêtement abrasif (60 ; 70) ; **caractérisé en ce que** :
ledit revêtement abrasif (60; 70) est constitué de particules de céramique angulaires ayant une dimension longitudinale comprise entre 50 et 150 microns intégrées dans une matrice d'un matériau de remplissage souple ou fragile et au moins un métal ou un alliage métallique choisi parmi le groupe constitué du nickel, des alliages à base de nickel, du cuivre, des alliages à base de cuivre, du cobalt, des alliages à base de cobalt, de l'aluminium, des alliages d'aluminium, du MCrAlY où M comprend au moins l'un parmi le nickel, le cobalt et le fer, et des mélanges de ceux-ci ; et
ledit revêtement abrasif (60 ; 70) dans un second mode de fonctionnement de dudit moteur à turbine à gaz ayant une force interparticulaire suffisante pour permettre la fracture dudit revêtement (60 ; 70) pour limiter les forces de frottement sur les profils aérodynamiques (26 ; 28).

2. Revêtement abrasif selon la revendication 1, dans lequel ledit revêtement abrasif (60 ; 70) porte lesdites pointes (26T ; 28T) desdits profils aérodynamiques (26 ; 28) pendant de faibles taux d'interaction radiale entre ledit revêtement abrasif (60 ; 70) et lesdits profils aérodynamiques (26 ; 28) et dans lequel ledit revêtement abrasif (60 ; 70) se fracture au cours de taux d'interaction élevés entre ledit revêtement abrasif (60 ; 70) et lesdits profils aérodynamiques (26 ; 28) pour limiter lesdites forces de frottement.

3. Revêtement abrasif selon la revendication 1 ou la revendication 2, dans lequel ledit matériau de remplissage souple ou fragile est choisi dans le groupe constitué du nitrure de bore hexagonal, de l'argile bentonite, des microsphères de talc, de graphite, de verre ou de céramique et des agglomérats de céramique faiblement liés.

4. Revêtement abrasif selon une quelconque revendication précédente, dans lequel lesdites particules de céramique ont une force suffisante pour couper les pointes (26T ; 28T) desdits profils aérodynamiques (26 ; 28).

5. Revêtement abrasif selon une quelconque revendication précédente, dans lequel lesdites particules de céramique sont choisies dans le groupe constitué des particules d'oxyde d'aluminium, de la zircone, du nitrure de bore cubique, du carbure de silicium, des alliages et des mélanges de ceux-ci.

6. Procédé de formation d'un joint dans un moteur à turbine à gaz (10), le procédé comprenant :
la fourniture dudit moteur à turbine à gaz (10) avec au moins une section ayant au moins un profil aérodynamique (26 ; 28) avec une pointe en métal nu (26T ; 28T) ;
la fourniture d'au moins une structure à proximité dudit au moins un profil aérodynamique (26 ; 28) avec ladite pointe en métal nu (26T ; 28T) ; et
l'application d'un revêtement abrasif (60 ; 70) ayant un premier mode dans lequel ledit revêtement (60 ; 70) retire le métal de ladite pointe de profil aérodynamique (26T ; 28T) ; **caractérisé en ce que** :
ledit revêtement abrasif (60 ; 70) est constitué de particules de céramique angulaires ayant une dimension longitudinale comprise entre 50 et 150 microns intégrées dans une matrice d'un matériau de remplissage souple ou fragile et au moins un métal ou un alliage métallique choisi parmi le groupe constitué du nickel, des alliages à base de nickel, du cuivre, des alliages à base de cuivre, du cobalt, des alliages à base de cobalt, de l'aluminium, des alliages d'aluminium, du MCrAlY où M comprend au moins l'un parmi le nickel, le cobalt et le fer, et des mélanges de ceux-ci ; et
ledit revêtement abrasif a un second mode dans lequel ledit revêtement abrasif (60 ; 70) se fracture sur ladite au moins une structure pour limiter les forces de frottement sur ledit au moins un profil aérodynamique (26 ; 28).

7. Procédé selon la revendication 6, dans lequel ledit au moins un profil aérodynamique (26 ; 28) se déplace radialement pendant le fonctionnement dudit moteur à turbine à gaz (10) et ledit revêtement abrasif (60 ; 70) est dans ledit premier mode lorsque ledit au moins un profil aérodynamique (26 ; 28) se déplace de moins de 10 mils par seconde, et/ou dans lequel ledit revêtement abrasif (60 ; 70) est dans ledit second mode lorsque ledit au moins un profil aérodynamique (26 ; 28) se déplace de plus de 1,27 cm (0,5 pouce) par seconde.

8. Procédé selon la revendication 6 ou la revendication 7,
dans
lequel ladite étape d'application de revêtement abrasif comprend la fourniture d'une charge d'alimentation contenant un métal ou un alliage métallique, du nitrure de bore hexagonal, et des particules de céramique, l'introduction de ladite charge d'alimentation au niveau d'une buse, et la projection de plasma d'air dudit métal ou alliage métallique, dudit nitrure de bore hexagonal, et desdites particules de céramique sur ladite au moins une structure, dans lequel, éventuellement, ladite étape de projection de plasma d'air est réalisée à une température qui entraîne des gouttelettes de particules de céramique pour former et être déposées sur ladite au moins une structure sous forme d'éclaboussure.

9. Procédé selon la revendication 8, dans lequel ladite étape de fourniture de charge d'alimentation comprend la fourniture dudit métal ou alliage métallique présent en une quantité de 15 % en volume à 45 % en volume, la fourniture desdites particules de céramique en une quantité de 0,5 % en volume à 15 % en volume et la fourniture du nitrure de bore hexagonal en tant que reste.

10. Procédé selon la revendication 9, dans lequel ladite étape de fourniture de charge d'alimentation comprend la fourniture d'un premier composant constitué de 20 % en volume à 30 % en volume de Ni20Cr et le reste du nitrure de bore hexagonal ayant des particules constitutives de 1,0 micron à 25 microns en taille et une taille de particules agglomérées comprise entre 25 microns et 150 microns, et la fourniture d'un second composant constitué de particules abrasives à base d'oxyde d'aluminium ayant une taille comprise entre 50 et 150 microns.

11. Procédé selon la revendication 10, dans lequel ladite étape d'application de revêtement comprend l'application d'un revêtement ayant de 1,0 à 10 % en volume de particules abrasives d'oxyde d'aluminium.
